Europäisches Patentamt

European Patent Office

Office européen des brevets

(19)

(11) Veröffentlichungsnummer: **0 436 205 A2**

# (12) EUROPÄISCHE PATENTANMELDUNG

(21) Anmeldenummer: 90125131.4

(22) Anmeldetag: 21.12.90

(51) Int. Cl.⁵: **C09J 4/06, C08F 265/06**

(30) Priorität: 05.01.90 DE 4000171

(43) Veröffentlichungstag der Anmeldung:
10.07.91 Patentblatt 91/28

(84) Benannte Vertragsstaaten:
AT BE CH DE DK ES FR GB IT LI NL SE

(71) Anmelder: RÖHM GMBH
Kirschenallee
W-6100 Darmstadt(DE)

(72) Erfinder: Benz, Volker, Dr.
Am Dachsrain 13
W-6128 Höchst 2(DE)
Erfinder: Blumenschein, Michael
Henri-Dunant-Strasse 19
W-6140 Bensheim 1(DE)

(54) Lichthärtbares Klebmittel für Formkörper aus Acrylkunststoff und Klebverfahren.

(57) Lichthärtendes Klebmittel für Formkörper aus Acrylkunststoff enthaltend eine Lösung, die zu wenigstens 70 Gew.-% aus Methylmethacrylat und einem Methylmethacrylat-Polymeren besteht und weiterhin 1 - 20 Gew.-% eines vernetzenden mehrfunktionellen, insbesondere tri- oder tetrafunktionellen Acryl- oder Methacrylmonomeren, sowie einen Photoinitiator enthält.

EP 0 436 205 A2

## LICHTHÄRTBARES KLEBMITTEL FÜR FORMKÖRPER AUS ACRYLKUNSTSTOFF UND KLEBVERFAHREN

Die Erfindung betrifft ein lichthärtbares Klebmittel für Formkörper aus Acrylkunststoff sowie dessen Verwendung in einem Verfahren zum Verkleben eines Formkörpers aus Acrylkunststoff mit einem anderen Formkörper aus Kunststoff.

Aus der EP-A 272 412 ist ein lichthärtbares Klebmittel für Formkörper aus Polycarbonatkunststoff bekannt, das ein polyfunktionelles Acrylmonomer und einen Photoinitiator enthält. Die bei der Härtung mittels UV-Strahlung erhältliche Klebschicht ist hart und spröde, jedoch bewirkt die hohe Zähigkeit und Dehnbarkeit des verklebten Polycarbonatkunststoffes, daß eine Verklebung von ausreichender Zugscherfestigkeit und Schlagzähigkeit entsteht.

Würde man das gleiche Klebmittel zum Verkleben von Formteilen aus Acrylkunststoff verwenden, so wären die Zugscherfestigkeit und Schlagzähigkeit unbefriedigend. Das beruht auf der größeren Härte und Sprödigkeit der Acrylkunststoffe. Zu deren Verklebung sind Klebmittel gebräuchlich, die zu wenigstens 80 Gew.-%, bezogen auf das Gewicht des Klebmittels, aus Methylmethacrylat und einem Methylmethacrylat-Polymeren bestehen und einen Photoinitiator enthalten. Ein solches lichthärtbares Klebmittel ist unter der Bezeichnung "Acrifix 92" (Warenzeichen der Röhm GmbH) im Handel. Bei Bestrahlungszeiten von 60 bis 70 min werden hohe Zugscherfestigkeiten und Schlagzähigkeiten erreicht.

Aufgabe und Lösung

Der Erfindung liegt die Aufgabe zugrunde, die Härtungsdauer der bekannten Klebmittel für Acrylkunststoffe zu verkürzen und die Erweichungstemperatur und die Zugscherfestigkeit der Verklebung zu erhöhen.

Es wurde gefunden, daß die gestellte Aufgabe bei einem lichthärtbaren Klebmittel für Formkörper aus Acrylkunststoff, enthaltend eine Lösung, die zu wenigstens 70 Gew.-%, bezogen auf das Gewicht des Klebmittels, aus Methylmethacrylat und einem Methylmethacrylat-Polymeren besteht und weiterhin einen Photoinitiator enthält, dadurch gelöst wird, daß das Klebmittel 1 bis 20, vorzugsweise 5 bis 20 Gew.-% eines vernetzenden, mehrfunktionellen Acryl- und/oder Methacrylmonomeren enthält.

Die vorteilhaften Eigenschaften der erfindungsgemäßen Klebmittel im Vergleich zu handelsüblichen Klebmitteln gehen aus der folgenden Gegenüberstellung hervor: Formteile aus extrudiertem Polymethylmethacrylat wurden mit dem in Versuch E beschriebenen Klebmittel gemäß der Erfindung unter der Einwirkung einer UV-Leuchtstofflampe von 80 Watt mit einem Strahlungsmaximum bei 350 nm verklebt. Zum Vergleich wurde unter den gleichen Bedingungen ein handelsübliches Klebmittel (Acrifix 92 [R], Röhm GmbH) eingesetzt.

| Klebmittel: | Versuch E | Acrifix 92 |
|---|---|---|
| Härtungsdauer | 8,4 min | 60 - 70 min |
| Zugscherfestigkeit | 47,8 N/qmm | 32,9 N/qmm |
| Schlagzähigkeit | | |
| (Charpy 179) | 7,8 kJ/qm | 9,3 kJ/qm |
| Vicat-Erweichungstemperatur | 120°C | 45°C |

Es war nicht vorauszusehen, daß der Einsatz eines mehrfunktionellen Acrylmonomeren nicht nur die erforderliche Härtungsdauer auf ein Achtel herabsetzen würde, sondern gleichzeitig die Zugscherfestigkeit, also die Belastbarkeit der Klebfuge, wesentlich steigert und die Vicaterweichungstemperatur der Klebschicht um mehr als 70°C erhöht. Die thermische Beständigkeit der Verklebung ist dadurch nicht mehr geringer als die des verklebten Acrylkunststoffes. Die erhöhte Zugscherfestigkeit und Vicaterweichungstemperatur lassen sich, ohne die Erfindung damit auf eine Theorie festlegen zu wollen, auf den wesentlich verminderten Gehalt an nicht polymerisiertem Methylmethacrylat in der ausgehärteten Klebschicht zurückführen. Während man bei der Härtung des erwähnten handelsüblichen UV-Klebmittels Restmonomergehalte von 10 bis 15 Gew.-% findet, werden in der Klebschicht nach Beispiel 1 nur etwa 3 Gew.-% an Restmonomeren gefunden. Die verbesserten physikalischen Eigenschaften lassen sich mit dem Wegfall der weichmachenden Wirkung des Restmonomeren erklären. Die starke Abnahme des Restmonomergehaltes ist überraschend.

Die zur Verklebung geeigneten Kunststoffe

Unter Acrylkunststoffen werden Polymerisate des Methylmethacrylats verstanden, die bis zu 50 Gew.-% aus anderen, damit radikalisch mischpolymerisierbaren Monomeren aufgebaut sein können. Vorzugsweise beträgt der Anteil des Methylmethacrylats 80 bis 100 Gew.-%. Als Comonomere kommen in erster Linie Alkylester der Acrylsäure mit 1 bis 4 Kohlenstoffatomen im Alkylrest sowie Acryl-und/oder Methacrylnitril, Styrol oder Maleinsäureanhydrid in Betracht. Bevorzugt sind thermoplastisch verformbare, d.h. spritzgießbare oder extrudierbare Acrylkunststoffe; ihre Viskositätszahl (nach DIN 53 727 bzw. 51 562, Teil 1) liegt vorzugsweise im Bereich von 20 bis 1000 ml/g.

Die Formteile aus Acrylkunststoff können unter Vervendung des erfindungsgemäßen Klebmittels mit Formteilen aus anderen Kunststoffen, wie Hart-PVC, Celluloseestern, Polystyrol, ABS-Kunststoffen, Polycarbonat oder Polyethersulfon verklebt werden. Ihre Vicat-Erweichungstemperatur soll nicht unter 70°C liegen. Hochvernetzte Kunststoffe, die weder thermoplastisch noch thermoelastisch verarbeitbar sind, sind weniger geeignet. Wenigstens einer der beteiligten Kunststoffe muß für die zur Aushärtung verwendete Strahlung ausreichend durchlässig sein, um in kurzer Zeit die Aushärtung bewirken zu können. Glasklare Kunststoffe sind bevorzugt. Mit besonderem Vorteil werden die erfindungsgemäßen Klebmittel zum Verkleben von Formteilen aus Acrylkunststoff miteinander verwendet.

Das Klebmittel

hat vorzugsweise eine Viskosität im Bereich von 100 bis 5000 mPa s bei Raumtemperatur. Bei einer niedrigeren Viskosität besteht die Gefahr, daß das Klebmittel vor oder während der Bestrahlung aus der Klebfuge ausläuft. Bei einer höheren Viskosität wird die Anwendung schwieriger. Die geeignete Viskosität läßt sich durch Wahl der Art und Menge des gelösten Methylmethacrylat-Polymeren nach Belieben einstellen.

Der Anteil des Methylmethacrylat-Polymeren liegt beispielweise zwischen 10 und 60 Gew.-%, bezogen auf das Gewicht des Klebmittels. Dies gilt für ein Polymer mit einem Molekulargewicht von 10 000 bis 1 Million (Gew.-Mittelwert). Polymerisate von höherem Molekulargewicht sind in niedrigeren Anteilen, solche von niedrigerem Molekulargewicht in entsprechend höherem Anteil einzusetzen.

Das Methylmethacrylat-Polymere ist zu 40 bis 100 %, vorzugsweise 90 bis 100 % seines Gewichts aus Methylmethacrylat aufgebaut. Mögliche Comonomere sind z.B. Alkylacrylate mit 1 bis 8 Kohlenstoffatomen im Alkylrest oder Alkylmethacrylate mit 2 bis 8 Kohlenstoffatomen im Alkylrest, Acryl- und/oder Methacrylnitril, Styrol oder Vinylester von gesättigten Fettsäuren mit 2 bis 10 Kohlenstoffatomen. In untergeordneten Mengen, etwa bis zu 2 Gew.-%, können Monomere mit funktionellen Gruppen, wie Acryl- und/oder Methacrylsäure, deren Hydroxyalkylester oder Aminoalkylester, am Aufbau des Methylmethacrylat-Polymeren beteiligt sein. Die Art und der Anteil der Comonomeren werden so gewählt, daß das Polymere in geeigneten organischen Lösungsmitteln sowie in Methylmethacrylat löslich ist; aus diesem Grund sind vernetzende Comonomere mit mehr als einer ethylenisch ungesättigten, radikalisch polymerisierbaren Gruppe ungeeignet.

Methylmethacrylat-Polymere aus 90 bis 100 Gew.-% Methylmethacrylat und zum verbleibenden Teil aus niederen Alkylacrylaten mit 1 bis 4 Kohlenstoffatomen im Alkylrest sind besonders geeignet.

Das Methylmethacrylat-Polymere macht zusammen mit flüssigem, monomerem Methylmethacrylat einen Anteil von wenigstens 70 Gew.-% des Klebmittels, vorzugsweise 85 bis 94,9 Gew.-% aus. Neben Methylmethacrylat, können andere monoäthylenisch ungesättigte, damit copolymerisierbare Monomere, wie solche, die als Comonomere für das Methylmethacrylat-Polymere genannt worden sind, einen begrenzten Teil, etwa bis zu 20 Gew.-% des gesamten Klebmittels ausmachen.

Erfindungsgemäß enthält das Klebmittel als vernetzendes Monomer 1 bis 20 Gew.-%, vorzugsweise 5 bis 20 Gew.-%, insbesondere 7 bis 12 Gew.-% eines mehrfunktionellen Acryl- und/oder Methacrylmonomeren. Es wurde gefunden, daß der Einfluß der mehrfunktionellen Monomeren auf die Härtungsdauer sowie auf den Gehalt an Restmonomeren und auf die mechanischen Festigkeitswerte der gehärteten Klebfuge mit der Zahl der Acryl- und/oder Methacrylfunktionen pro Molekül des vernetzenden Monomeren erheblich zunimmt. Aus diesem Grunde ist als vernetzende Komponente ein wenigstens trifunktionelles Acryl- und/oder Methacrylmonomer bevorzugt und ein wenigstens tetrafunktionelles Acryl- und/oder Methacrylmonomer besonders bevorzugt. Die Zahl der Acryl- bzw. Methacrylfunktionen liegt bevorzugt bei 4 bis 8. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxylgruppen und vorzugsweise 2 bis 6 Kohlenstoffatomen ab. Beispiele sind Ethylenglykol, Propylenglykol, Butandiol-1,4, Hexandiol-1,6, Diethylenglykol, Triethylenglykol, Glycerin, Trimethylolpropan, Pentaerythrit, Tetramethylol-ethan, Sorbitan. Beispiele geeigneter Ester sind

Glykol-diacrylat oder -dimethacrylat,

Butandiol-diacrylat oder -dimethacrylat,

Dimethylolpropan-diacrylat oder -dimethacrylat,

Diethylenglykol-diacrylat oder -dimethacrylat,

Trimethylolpropan-triacrylat oder -trimethacrylat,

Glycerin-triacrylat oder -trimethacrylat,

Pentaerythrit-tetraacylat oder -tetramethacylat

1,2,3,4-Butantetraol-tetraacylat oder -tetramethacylat

Tetramethylolethan-tetraacylat oder -tetramethacylat

2,2-Dihydroxy-propandiol-1,3-tetraacylat oder -tetramethacylat

Sorbitan-tetra-, -penta- oder -hexa-acrylat oder die entsprechenden Methacrylate.


Es können auch Gemische von vernetzenden Monomeren mit zwei bis vier oder mehr äthylenisch ungesättigten, radikalisch polymerisierbaren Gruppen mitverwendet werden. Dabei sollten vernetzende Comonomere mit einer niedrigen Zahl von Acryl- und/oder Methacrylfunktionen in geringerer Menge als solche mit einer höheren Zahl solcher Funktionen eingesetzt werden.

Als Photoinitiatoren werden die dafür gebräuchlichen Verbindungen eingesetzt, die beispielsweise der Klasse der Benzophenone, der Acetophenone, der Benzoine oder der Azoverbindungen angehören können. Auch Mischungen mehrerer Photoinitiatoren sind anwendbar. Besonders geeignet ist 2-Hydroxy-2-methyl-1-phenyl-propan-1-on. Sie werden in üblichen Mengen eingesetzt, d.h. wenigstens 0,1 Gew.-% und vorzugsweise 1,0 bis 10 Gew.-%, bezogen auf das Gewicht des Klebmittels.

Weitere übliche Zusätze können bei Bedarf mitverwendet werden, z.B. UV-Schutzmittel, UV-Absorber, hochsiedenende Weichmacher u.ä..


Das Klebverfahren


Zum Verkleben eines Formkörpers aus Acrylkunststoff mit einem anderen Formkörper aus Kunststoff wird eine Schicht des erfindungsgemäßen Klebmittels, die mit den zu verklebenden Formkörpern in Berührung steht, unter der Einwirkung einer Strahlung, für die wenigstens einer der Formkörper durchlässig ist und die auf den Photoinitiator aktivierend wirkt, ausgehärtet.

In der Regel wird einer der zu verklebenden Kunststoffkörper mit einer Schicht des flüssigen Klebmittels beschichtet und mit dem anderen Kunststoffkörper möglichst blasenfrei zusammengefügt. Man kann auch die Teile trocken aneinanderfügen und das Klebmittel durch Kapillarkraft in die Klebfuge einziehen lassen. Die Klebstoffuge kann eine Dicke von etwa 1 Mikrometer bis zu mehreren Millimetern haben. Die aneinandergefügten Körper werden in der gewünschten Stellung fixiert und einer geeigneten Strahlung zur Härtung der Kleberschicht ausgesetzt. Der Ausschluß von Sauerstoff bzw. Luft ist in der Regel nicht erforderlich.

Die verwendete UV-Strahlung hat zweckmäßig im Bereich von 300 bis 400 nm ein Leistungsmaximum. Geeignete Strahlungsguellen sind Schwarzlicht-Leuchtstofflampen, Quecksilberdampfstrahler, UV-Laser u. dergl. mit einer Leistung von etwa 4 bis 2000 Watt. Vorteilhaft ist eine Strahlungsleistung von mindestens 10 mWatt/qcm. Ungefärbte, klar durchsichtige Acrylkunststoffe haben eine ausreichende Durchlässigkeit für UV-Strahlung, so daß sie eine schnelle Härtung gestatten.

Das Klebmittel in der Klebfuge härtet bei einer Temperatur im Bereich von 0 bis 80° C am besten aus. Höhere Temperaturen können zur Verdunstung flüchtiger Bestandteile, niedriger Temperaturen zu längeren Härtungszeiten führen. Die Klebfuge härtet unter günstigen Bedingungen innerhalb von 8 bis 10 min vollständig aus. Die Härtung kann länger dauern, wenn das Strahlungsspektrum der UV-Strahlungsquelle nicht mit dem Absorptionsspektrum des Initiators übereinstimmt, wenn die Leistung der Strahlungsquelle gering ist oder die der Strahlung ausgesetzte Kunststoffschicht eine hohe UV-Absorption hat. Eine Behinderung durch Luftsauerstoff wird im allgemeinen nicht beobachtet. Selbst freiliegende Teile der Kleberschicht härten schnell und klebfrei aus.

Nach Abschluß der Bestrahlung kann der verklebte Formkörper sofort weiterverarbeitet werden. Die erfindungsgemäß erzeugte Verklebung erlaubt es, selbst bei hochbeanspruchte oder der Witterung auszusetzenden Klebteilen auf eine anschließende Temperung zu verzichten. Die hohe Schlagzähigkeit und Zugscherfestigkeit der gehärteten Klebfuge gestattet es, den verklebten Formkörper wie ein einstückiges Formteil zu bearbeiten, z.B. durch Sägen, Fräsen, Bohren, Schleifen oder durch thermoelastische Umformung, wenn die verklebten Formkörper selbst einer solchen Bearbeitung zugänglich sind.

Ausführung:

Für Versuchszwecke werden jeweils zwei 3 mm dicke Tafeln aus extrudiertem farblosem klarem Acrylglas auf einer Überlappungsfläche von 40 x 200 mm miteinander verklebt. Die Klebflächen werden vorher entfettet. Auf eine der Klebflächen wird eine 1 mm dicke Schicht des Klebmittels aufgetragen. Die andere Klebfläche wird von einer Kante beginnend blasenfrei aufgelegt.

Auf die freiliegende Rückseite einer Klebfläche läßt man aus einer Enfernung von 3 cm eine UV-A-Solarien-Leuchtstofflampe (Philips TL 09-R) mit einer Leistung von 80 Watt bei Raumtemperatur während 8 bis 12 min einwirken. Die Härtungsdauer wird vorher an einer Probe des Klebmittels im Reagenzglas mit einem Thermoelement in der Klebmittelschicht ermittelt; gemessen wird die Zeit vom Beginn der Bestrahlung bis zum Erreichen des Temperaturmaximums.

Jeweils 100 Gew.-Teile der untersuchten Klebmittel hatten folgende Zusammensetzung:

74 bis 79 Gew.-Teile einer 32-%igen Lösung von Polymethylmethacrylat (MW 50 000) in Methylmethacrylat (die Lösung wird in der nachfolgenden Tabelle mit "MMA/PMMA" bezeichnet)

15 Gew.-Teile MMA,

1 Gew.-Teil UV-Initiator Benzil-dimethylketal (Irgacure 641) 5 bis 10 Gew.-Teile Vernetzungsmittel Härtungsdauer in Abhängigkeit von Art und Menge des Vernetzungsmittel: (GT bedeutet Gewichtsteile)

    I.      Versuche mit Penta-erythrit-tetraacrylat (PETA):

           Versuch A: 5 GT PETA, 79 GT MMA/PMMA - 10,2 min

           Versuch B: 6 GT PETA, 78 GT MMA/PMMA - 10,8 min

           Versuch C: 7 GT PETA, 77 GT MMA/PMMA - 8,4 min

           Versuch D: 8 GT PETA, 76 GT MMA/PMMA - 8,4 min

           Versuch E: 10 GT PETA, 74 GT MMA/PMMA - 8,4 min

    II.     Versuche mit Hexan-diol-1,6-diacrylat (HDDA):

           Versuch F: 2 GT HDDA, 82 GT MMA/PMMA - 13,2 min

           Versuch G: 3 GT HDDA, 81 GT MMA/PMMA - 15,0 min

           Versuch H: 4 GT HDDA, 80 GT MMA/PMMA - 13,8 min

           Versuch I: 5 GT HDDA, 79 GT MMA/PMMA - 12,0 min

    III.    Versuche mit Trimethylolpropan-triacrylat (TPTA):

           Versuch K:1,5 GT TPTA,82,5GT MMA/PMMA - 13,8 min

           Versuch L: 5 GT TPTA, 79 GT MMA/PMMA - 11,4 min

           Versuch M: 10 GT TPTA, 74 GT MMA/PMMA - 10,2 min

## Ansprüche

1. Lichthärtbares Klebmittel für Formkörper aus Acrylkunststoff, enthaltend eine Lösung, die zu wenigstens 70 Gew.-%, bezogen auf das Gewicht des Klebmittels, aus Methylmethacrylat und einem Methylmethacrylat-Polymeren besteht und weiterhin einen Photoinitiator enthält, dadurch gekennzeichnet, daß das Klebmittel 1 bis 20 Gew.-% eines vernetzenden, mehrfunktionellen Acryl- und/oder Methacrylmonomeren enthält.

2. Klebmittel nach Anspruch 1, dadurch gekennzeichnet, daß es wenigstens 5 Gew.-% des mehrfunktionelles Acryl- und/oder Methacrylmonomers enthält.

3. Klebmittel nach Anspruch 1 oder 2, dadurch gekennzeichnet, daß es ein wenigstens trifunktionelles Acryl- und/oder Methacrylmonomer enthält.

4. Klebmittel nach Anspruch 3, dadurch gekennzeichnet, daß es ein wenigstens tetrafunktionelles Acryl- und/oder Methacrylmonomer enthält.

5. Verfahren zum Verkleben eines Formkörpers aus Acrylkunststoff mit einem anderen Formkörper aus Kunststoff durch Aushärten einer Schicht des Klebmittels, die mit den zu verklebenden Formkörpern in Berührung steht, unter der Einwirkung einer Strahlung, für die wenigstens einer der Formkörper durchlässig ist und die auf den Photoinitiator aktivierend wirkt, dadurch gekennzeichnet, daß das Klebmittel nach Anspruch 1, 2, 3 oder 3 eingesetzt wird.

6. Verfahren nach Anspruch 5, dadurch gekennzeichnet, daß Formkörper aus Acrylkunststoff miteinander verklebt werden.

7. Verfahren nach Anspruch 6, dadurch gekennzeichnet, daß Formkörper aus thermoplastisch verformbarem Acrylkunststoff miteinander verklebt werden.